# EUROPEAN PATENT SPECIFICATION

(11) **EP 4 250 505 B1**
(45) Date of publication and mention of the grant of the patent: **05.11.2025**
(21) Application number: 21896499.7
(22) Date of filing: 16.09.2021
(51) Int. Cl.: H02H 9/04, H01H 47/22

(54) **SWITCHING CIRCUIT, CIRCUIT BOARD ASSEMBLY AND ELECTRONIC DEVICE**
SCHALTKREIS, LEITERPLATTENANORDNUNG UND ELEKTRONISCHE VORRICHTUNG
CIRCUIT DE COMMUTATION, ASSEMBLAGE DE CARTE ÉLECTRONIQUE ET APPAREIL ÉLECTRONIQUE

(30) Priority: 25.11.2020 CN 202011340211
(43) Date of publication of application: 27.09.2023
(73) Proprietor: ZTE Corporation, Shenzhen, Guangdong 518057 (CN)
(72) Inventor: LI, Xiaogang, Shenzhen, Guangdong 518057 (CN)
(74) Representative: Osterhoff, Utz
(86) International application number: PCT/CN2021/118857
(87) International publication number: WO 2022/110995

(56) References cited:
- CN-A- 102 122 142
- CN-U- 205 029 328
- CN-Y- 201 113 426
- US-A- 5 229 695

## Description

### TECHNICAL FIELD

Embodiments of the present application relate to the technical field of circuits, and in particular to a switching circuit, a circuit board assembly and an electronic device.

### BACKGROUND

Currently, in communication, industrial control, power automation and other fields, the switching interface is an electrical interface for equipment interconnection, communication and control action, but because in practice, the switching interface operates in a complex electromagnetic environment, the switching interface may be impacted by surge voltages originating from lightning strikes or operating overvoltages, etc. If no overvoltage protection device is added in the switching circuit connected to the switching interface, only the isolation performance of the switching circuit itself cannot withstand large surge voltages, which will lead to damage to components, loss of information, reset or misoperation of the switching circuit. In order to defend the impact from the surge voltage of the switching interface, the overvoltage protection device can be added at each switching interface, thus to make the switching circuit to have good anti-surge capability.

However, the added overvoltage protection device for preventing the impact of surge voltage destroys the insulation of the switching circuit, which easily makes the switching circuit not to pass the voltage withstand test, that is, the switching circuit withstands a high operating frequency or direct current voltage during the voltage withstand test, and the external operating frequency overvoltage entering from a switching cable can cause over-power damage to the overvoltage protection device and cause the switching circuit to not pass the voltage withstand test. Moreover, for multi-loop relays, it is necessary to add overvoltage protection devices for each contact, which occupies a large board area and is costly.

Document CN 205 029 328 U discloses a switching device with a control circuit having an overvoltage protection device.

### SUMMARY

Embodiments of the present application provide a switching circuit according to claim 1.

Embodiments of the present application provide a circuit board assembly, including the switching circuit as mentioned above.

Embodiments of the present application provide an electronic device, including the circuit board assembly as mentioned above.

### BRIEF DESCRIPTION OF THE DRAWINGS

FIG. 1 is a schematic structural view of a switching circuit according to a first embodiment of the present application.
FIG. 2 is a voltage waveform diagram of the switching circuit at a contact switch side according to the first embodiment of the present application.
FIG. 3 is a voltage waveform diagram of the switching circuit at a coil side according to the first embodiment of the present application.
FIG. 4 is a voltage waveform diagram of the switching circuit at a control circuit side according to the first embodiment of the present application.
FIG. 5 is a schematic structural view of a switching circuit according to a second embodiment of the present application.

### DETAILED DESCRIPTION OF THE EMBODIMENTS

The main purpose of embodiments of the present application is to propose a switching circuit, a circuit board assembly and an electronic device, such that the voltage withstand capability of the switching circuit is improved when the surge voltage withstood by the overvoltage protection device in the switching circuit is reduced.

In order to make the purpose, technical solutions and advantages of the embodiments of the present application clearer, each embodiment of the present application will be described in detail below in conjunction with the drawings. However, those skilled in the art can understand that in each embodiment of the present application, many technical details are presented to enable the reader to better understand the present application. The following embodiments are divided for the convenience of description and shall not constitute any limitation to the specific implementation of the present application, and each embodiment can be combined and referenced to each other without contradiction.

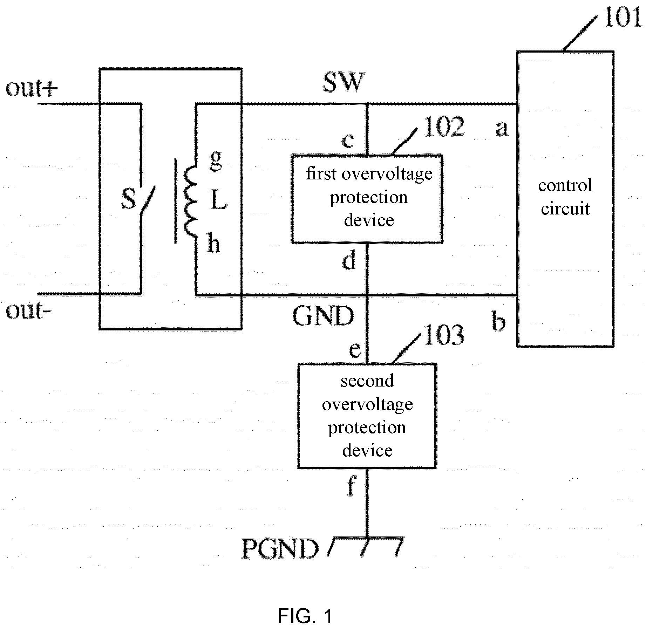

The first embodiment of the present application relates to a switching circuit, and the switch quantity output circuit shown in FIG. 1 includes: a control circuit 101, a contact switch S, a coil L, a first overvoltage protection device 102, and a second overvoltage protection device 103.

A first end a of the control circuit 101 is connected to a first end g of the coil L, a second end b of the control circuit 101 is connected to a second end h of the coil L, and a distributed capacitance is provided between the contact switch S and the coil L. The control circuit 101 controls the contact switch S to turn-on and turn-off by adjusting the magnetic field of the coil L. A first end c of the first overvoltage protection device 102 is connected between the first end a of the control circuit 101 and the first end g of the coil L, that is, SW, and a second end d of the first overvoltage protection device 102 is connected between the second end b of the control circuit 101 and the second end h of the coil L, that is, connected to a ground GND of the switching circuit.

The first end e of the second overvoltage protection device 103 is connected between the second end b of the control circuit 101 and the second end h of the coil L, and the second end f of the second overvoltage protection device 103 is connected to a protective ground PGND, and the two ends of the contact switch are the switching interface out+ and out- of the switching circuit.

In practice, the structure consisting of the contact switch S and the coil L may be provided by a relay or by other devices having the contact switch S and the coil L, as long as the contact switch S and coil L exist in the device.

In one embodiment, the control circuit 101 is a digital control circuit.

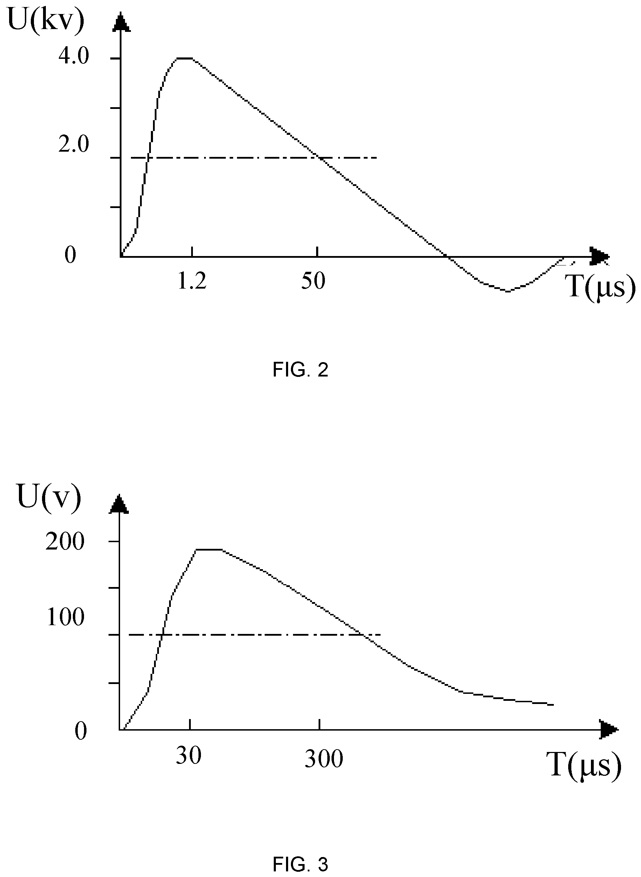

FIG. 2 is a voltage waveform at the switching interface out+ and out- when there is a surge at the switching interface out+ and out-, and FIG. 3 is the voltage waveform at the coil L when there is a surge at the switching interface out+ and out-, where the switching interface out+ and out- have the same surge in FIGS. 2 and 3.

As shown in FIG. 2, the voltage at the switching interface out +, out- is up to 4KV. As shown in FIG. 3, under the same surge existing at the switching interface out +, out -, the voltage at the coil L side is only up to 200V, that is, the switching interface out +, out - withstand the surge, the surge voltage at the contact switch S side is larger, the surge voltage at the coil L side is smaller.

In the embodiment, the first overvoltage protection device 102 and the second overvoltage protection device 103 are provided at the coil L side, due to the existence of distributed capacitance between the contact switch S and the coil L, with a certain degree of isolation, most of the surges can be blocked to be transferred from the contact switch S side to the coil L side, so that the surge voltage at the coil L side is significantly reduced. Under the same surge voltage withstood by the switching interface, the overvoltage protection device of the present application withstands a smaller surge voltage. Considering that the switching interfaces out+, out- are connected with an overvoltage protection device, the overvoltage protection device withstands a larger surge voltage, while the first overvoltage protection device 102 and the second overvoltage protection device 103 in the present application are set at the coil L side, the surge voltage withstood is smaller, therefore, under the same surge voltage withstood by the switching interface, the overvoltage protection device of the present application withstands a smaller surge voltage, the chances of the damage to the overvoltage protection device are reduced.

In practice, when there is the surge at the switching interface out +, out -, first most of the surges are blocked by the distributed capacitance between the contact switch S and the coil L to be transferred from the contact switch S side to the coil L side, after some of the surges will reach the first overvoltage protection device 102 and the second overvoltage protection device 103, the first end of the first overvoltage protection device 102 is connected to SW, the second end of the first overvoltage protection device 102 is connected to GND, such that the differential mode surge and the reverse electric potential in the switching circuit can be absorbed, the first end of the second overvoltage protection device 103 is connected to GND, the second end of the second overvoltage protection device 103 is connected to PGND, such that the surge of GND can be drained to the PGND. It should be noted that when the surge voltage at SW is greater than the surge voltage at GND, the first overvoltage protection device 102 will transfer the surge voltage at SW to GND, and the second overvoltage protection device 103 will drain the surge to the PGND.

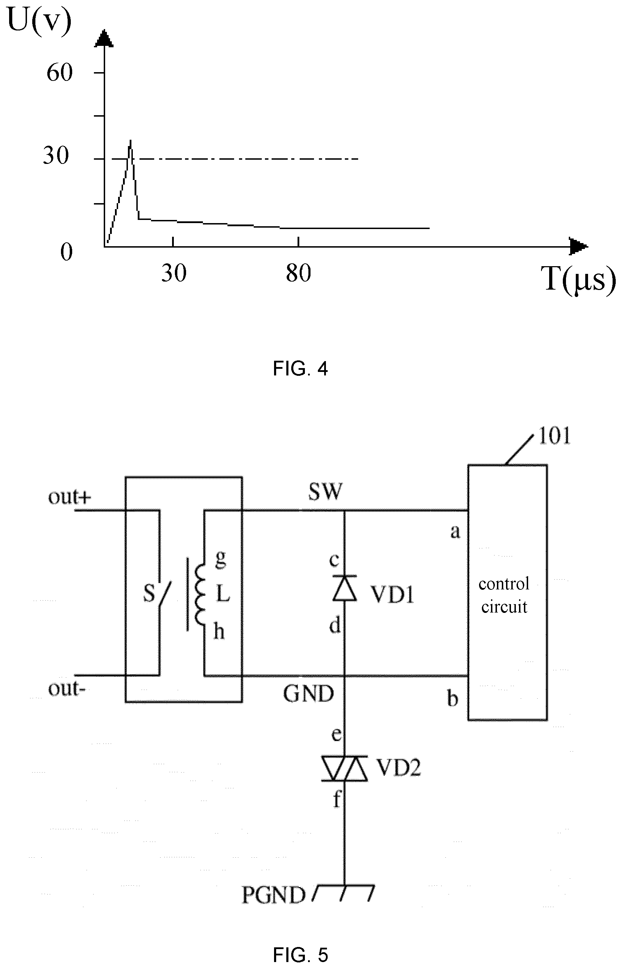

FIG. 4 is a voltage waveform diagram of the switching circuit at the control circuit side according to the embodiment of the present application, where the voltage at the switching interface out+, out- is the same as FIG. 2, FIG. 3. It can be seen that in this embodiment, the voltage at the control circuit is reduced to about 30V when the voltage at the switching interface out+, out- reaches up to 4KV, and referring to FIG. 3, it can be seen that a technical solution that no overvoltage protection device is provided between the coil L and the control circuit between the technical solution is used, the voltage at the coil L side in FIG. 3 is the voltage of the control circuit, it can be seen that the voltage at the control circuit of the present application is substantially reduced, to avoid the impact damage to the control circuit by the surge entering from the switching interface out+, out-.

It should be noted that in the actual production process, the voltage withstand test will be performed on the switching circuit, that is, the switching circuit will be applied to a higher operating frequency or DC voltage in the voltage withstand test, and considering that the overvoltage protection device is directly provided at the switching interface out+, out-, the external operating frequency overvoltage intruding along the switching cable will cause over-power damage to the overvoltage protection device and cause the switching circuit to not pass the voltage withstand test. In this embodiment, under the same test voltage withstood by the switching interface, when the voltage withstand test is performed on the switching circuit, due to the existence of distributed capacitance between the contact switch S and the coil L, and the distributed capacitance can block the voltage for the voltage withstand test to be transferred to the first overvoltage protection device 102 and the second overvoltage protection device 103, the first overvoltage protection device 102 and the second overvoltage protection device 103 do not need to withstand the test voltage, the voltage withstand capability of the switching circuit is improved, i.e., the switching circuit has a higher rate of passing the voltage withstand test.

It should be noted that, considering that the switching circuit may have multiple contact switches, the switching interface at each contact switch will be connected with an overvoltage protection device, such as a varistor, because the switching interface at each contact switch is set with an overvoltage protection device, not only the complexity and cost of the circuit are increased, but also the volume of the circuit board of the circuit is larger. In the present application, the first overvoltage protection device 102 and the second overvoltage protection device 103 are only set on the coil side, which can reduce the complexity, the volume and cost of the switching circuit when ensuring that the switching circuit has good anti-surge capability.

In this embodiment, the first overvoltage protection device 102 and the second overvoltage protection device 103 are set at the coil L side, the distributed capacitance existing between the contact switch S and the coil L isolates a large number of surges, so that the surges reaching at the coil L side are smaller. Under the same surge voltage withstood by the switching interface, the overvoltage protection device of the present application withstands a smaller surge voltage; when the voltage withstand test is performed on the switching circuit, due to existence of the distributed capacitance between the contact switch S and the coil L, the distributed capacitance blocks the voltage for the voltage withstand test to be transferred to the first overvoltage protection device 102 and the second overvoltage protection device 103, and the first overvoltage protection device 102 and the second overvoltage protection device 103 do not need to withstand the test voltage, and under the same rated voltage of the overvoltage protection device, the switching circuit of the present application has a higher voltage withstand capability.

In one embodiment, the first overvoltage protection device 102 includes one of a transient diode, a rectifier diode, and an RC circuit.

In one embodiment, the second overvoltage protection device 103 is a transient diode or a clamp diode.

In one embodiment, a rated voltage of the first overvoltage protection device is greater than an operating voltage of the switching circuit, such as 1.2 times, 1.3 times, 1.4 times; and a rated voltage of the second overvoltage protection device is greater than the operating voltage of the switching circuit, such as 1.2 times, 1.3 times, 1.4 times. The rated voltage of the overvoltage protection device is higher than the operating voltage of the switching circuit, so that in the absence of overvoltage impact, the voltage of the switching circuit in the normal operation will not cause the overvoltage protection device to operate, ensuring that the overvoltage protection device will not affect the operation of the switching circuit when the switching circuit operates normally. In the presence of surge impact, when the voltage of the overvoltage protection device rises to a start voltage of the overvoltage protection device (this start voltage is slightly higher than the rated voltage of the overvoltage protection device), the overvoltage protection device starts to operate, that is, to absorb the surge voltage to protect the control circuit. Therefore, in order to ensure that the overvoltage protection device operates only in the presence of surge impact, the overvoltage protection device needs to be set to a rated power greater than a voltage of the switching circuit in the normal operation, to ensure that the switching circuit operates normally, the overvoltage protection device does not operate.

A second embodiment of the present application relates to a switching circuit. The second embodiment is substantially the same as the first embodiment, the main difference is that in the second embodiment of the present application, the first overvoltage protection device is a unidirectional transient diode and the second overvoltage protection device is a bidirectional transient diode. It should be noted that the implementation details of the above first embodiment are still valid in this embodiment, which will not repeated herein for avoiding repetition.

The second embodiment of the present application relates to a switching circuit, the specific flow shown in FIG. 5 includes a control circuit 201, a contact switch S, a coil L, a unidirectional transient diode VD1, and a bidirectional transient diode VD2.

The first end a of the control circuit 201 is connected to the first end g of the coil L, the second end b of the control circuit 201 is connected to the second end h of the coil L, and a distributed capacitance is provided between the contact switch S and the coil L; the control circuit 201 controls the contact switch S to turn-on and turn-off by adjusting the magnetic field of the coil L. The first end c of the unidirectional transient diode VD1 is a cathode and is connected between the first end a of the control circuit 201 and the first end g of the coil L, i.e., SW, and the second end d of the unidirectional diode VD1 is an anode and is connected between the second end b of the control circuit 101 and the second end h of the coil L, i.e., the GND of the switching circuit; the first end e of the bidirectional transient diode VD2 is connected between the second end b of the control circuit 201 and the second end h of the coil L, and the second end f of the bidirectional transient diode VD2 is connected to the PGND, and the two ends of the contact switch are the switching interfaces out+ and out- of the switching circuit.

After the surge at the switching interfaces out +, out- is transferred to the coil L side through the distributed capacitance between the contact switch S and the coil L, if the surge voltage at SW is greater than the surge voltage at GND, the unidirectional diode VD1 will be breakdown by the surge, so that the surge voltage at SW will be transferred to GND, and drained to the PGND through the second overvoltage protection device 103; if the surge voltage at GND is greater than the surge voltage at SW, the bidirectional transient diode VD2 will drain the surge of the GND to the PGND.

In this embodiment, the first overvoltage protection device is set as a unidirectional transient diode, not only the speed of absorption of reverse electric potential and differential mode surge is improved, but also the cost of the switching circuit is saved because the cost of the unidirectional diode is lower than the cost of bidirectional transient diode. In this embodiment, the second overvoltage protection device is set as a bidirectional transient diode, to improve the speed of the second overvoltage protection device to absorb the surge voltage at the ground.

In one embodiment, the rated voltage of the first overvoltage protection device is 1.2 times the operating voltage of the switching circuit, and the rated voltage of the second overvoltage protection device is 1.2 times the operating voltage of the switching circuit. Because the rated voltage parameters of the overvoltage protection device have a certain tolerance range, the operating voltage of the switching circuit also has a fluctuating upper limit, in order to avoid misoperation of the overvoltage protection device due to its own tolerance range and the fluctuation of the operating voltage of the switching circuit when there is no external surge overvoltage impact, the rated voltage of the overvoltage protection device must be higher than the operating voltage of the switching circuit. Therefore, in this embodiment, because considering that the rated voltage of the overvoltage protection device has a tolerance range and the operating voltage of the switching circuit also has a fluctuating upper limit, the rated power of the overvoltage protection device is set to 1.2 times the operating voltage of the switching circuit, the rated power of the overvoltage protection device is set at this value, it can avoid the problem of misoperation of the overvoltage protection device when there is no external surge overvoltage impact.

The third embodiment of the present application relates to a circuit board assembly including the switching circuit of the first embodiment and the second embodiment described above.

In this embodiment, through the above switching circuit, not only the surge voltage withstood by the overvoltage protection device in the circuit board assembly is reduced, but also the voltage withstand capacity of the circuit board assembly is improved .

The fourth embodiment of the present application relates to an electronic device including the circuit board assembly of the third embodiment described above.

In the embodiment, by using the circuit board assembly described above, not only the surge voltage withstood by the overvoltage protection device in the circuit board assembly of the electronic device is reduced, but also the voltage withstand capability of the circuit board assembly of the electronic device is improved.

## Claims

1. A switching circuit, **characterized by** comprising:
a control circuit (101), a contact switch (S), a coil (L), a first overvoltage protection device (102), a second overvoltage protection device (103);
wherein a first end (a) of the control circuit (101) is connected to a first end (g) of the coil (L), a second end (b) of the control circuit (101) is connected to a second end (h) of the coil (L), and a distributed capacitance is provided between the contact switch (S) and the coil (L);
the control circuit (101) is configured to control the contact switch (S) to turn-on and turn-off by adjusting a magnetic field of the coil (L);
a first end (c) of the first overvoltage protection device (102) is connected to the first end (a) of the control circuit (101) and the first end (g) of the coil (L), and a second end (d) of the first overvoltage protection device (102) is connected to the second end (b) of the control circuit (101) and the second end (h) of the coil (L); and
a first end (e) of the second overvoltage protection device (103) is connected to the second end (b) of the control circuit (101) and the second end (h) of the coil (L), and a second end (f) of the second overvoltage protection device (103) is connected to a protective ground (PGND).

2. The switching circuit according to claim 1, wherein the first overvoltage protection device (102) is one of a transient diode, a clamp diode, a rectifier diode, and a resistor-capacitance circuit called RC circuit.

3. The switching circuit according to claim 1, wherein the first overvoltage protection device (102) is a unidirectional transient diode (VD1).

4. The switching circuit according to any one of claims 1 to 3, wherein the second overvoltage protection device (103) is a transient diode or a clamp diode.

5. The switching circuit according to any one of claims 1 to 3, wherein the second overvoltage protection device (103) is a bi-directional transient diode (VD2).

6. The switching circuit according to any one of claims 1 to 5, wherein the control circuit (101) is a digital control circuit.

7. The switching circuit according to any one of claims 1 to 6, wherein a rated voltage of the first overvoltage protection device (102) is greater than an operating voltage of the switching circuit, and a rated voltage of the second overvoltage protection device (103) is greater than the operating voltage of the switching circuit.

8. The switching circuit according to claim 7, wherein the rated voltage of the first overvoltage protection device (102) is 1.2 times the operating voltage of the switching circuit, and the rated voltage of second overvoltage protection device (103) is 1.2 times the operating voltage of the switching circuit.

9. A circuit board assembly, **characterized by** comprising the switching circuit according to any one of claims 1 to 8.

10. An electronic device, **characterized by** comprising the circuit board assembly of claim 9.

## Patentansprüche

1. Schaltkreis, **dadurch gekennzeichnet, dass** er umfasst:
eine Steuerschaltung (101), ein Kontaktschalter (S), eine Spule (L), eine erste Überspannungsschutzvorrichtung (102), eine zweite Überspannungsschutzvorrichtung (103);
wobei ein erstes Ende (a) der Steuerschaltung (101) mit einem ersten Ende (g) der Spule (L) verbunden ist, ein zweites Ende (b) der Steuerschaltung (101) mit einem zweiten Ende (h) der Spule (L) verbunden ist, und eine verteilte Kapazität zwischen dem Kontaktschalter (S) und der Spule (L) vorgesehen ist;
wobei die Steuerschaltung (101) so konfiguriert ist, dass sie den Kontaktschalter (S) durch Einstellen eines Magnetfelds der Spule (L) zum Ein- und Ausschalten steuert;
wobei ein erstes Ende (c) der ersten Überspannungsschutzvorrichtung (102) mit dem ersten Ende (a) der Steuerschaltung (101) und dem ersten Ende (g) der Spule (L) verbunden ist, und ein zweites Ende (d) der ersten Überspannungsschutzvorrichtung (102) mit dem zweiten Ende (b) der Steuerschaltung (101) und dem zweiten Ende (h) der Spule (L) verbunden ist; und
wobei ein erstes Ende (e) der zweiten Überspannungsschutzvorrichtung (103) mit dem zweiten Ende (b) der Steuerschaltung (101) und dem zweiten Ende (h) der Spule (L) verbunden ist, und ein zweites Ende (f) der zweiten Überspannungsschutzvorrichtung (103) mit einer Schutzerde (PGND) verbunden ist.

2. Schaltkreis nach Anspruch 1, wobei die erste Überspannungsschutzvorrichtung (102) eine von einer Transientendiode, einer Klemmendiode, einer Gleichrichterdiode und einer Widerstands-Kapazitäts-(RC)-Schaltung ist.

3. Schaltkreis nach Anspruch 1, wobei die erste Überspannungsschutzvorrichtung (102) eine unidirektionale Transientendiode (VD1) ist.

4. Schaltkreis gemäß einem der Ansprüche 1 bis 3, wobei die zweite Überspannungsschutzvorrichtung (103) eine Transientendiode oder eine Klemmendiode ist.

5. Schaltkreis gemäß einem der Ansprüche 1 bis 3, wobei die zweite Überspannungsschutzvorrichtung (103) eine bidirektionale Transientendiode (VD2) ist.

6. Schaltkreis nach einem der Ansprüche 1 bis 5, wobei die Steuerschaltung (101) eine digitale Steuerschaltung ist.

7. Schaltkreis gemäß einem der Ansprüche 1 bis 6, wobei eine Nennspannung der ersten Überspannungsschutzvorrichtung (102) größer als eine Betriebsspannung des Schaltkreises ist, und wobei eine Nennspannung der zweiten Überspannungsschutzvorrichtung (103) größer als die Betriebsspannung des Schaltkreises ist.

8. Schaltkreis nach Anspruch 7, wobei die Nennspannung der ersten Überspannungsschutzvorrichtung (102) das 1,2-fache der Betriebsspannung des Schaltkreises beträgt und wobei die Nennspannung der zweiten Überspannungsschutzvorrichtung (103) das 1,2-fache der Betriebsspannung des Schaltkreises beträgt.

9. Leiterplattenanordnung, **dadurch gekennzeichnet, dass** sie den Schaltkreis nach einem der Ansprüche 1 bis 8 umfasst.

10. Elektronisches Gerät, **gekennzeichnet durch**, dass es die Leiterplattenanordnung gemäß Anspruch 9 umfasst.

## Revendications

1. Circuit de commutation, **caractérisé par** comprenant :
un circuit de commande (101), un commutateur à contact (S), une bobine (L), un premier dispositif protecteur contre surtension (102), un second dispositif protecteur contre surtension (103) ;
dans lequel une première extrémité (a) du circuit de commande (101) est connectée à une première extrémité (g) de la bobine (L), une seconde extrémité (b) du circuit de commande (101) est connectée à une seconde extrémité (h) de la bobine (L), et une capacité distribuée est prévue entre le commutateur à contact (S) et la bobine (L) ;
le circuit de commande (101) est configuré pour commander le commutateur à contact (S) à être activé et désactivé en ajustant un champ magnétique de la bobine (L) ;
une première extrémité (c) du premier dispositif protecteur contre surtension (102) est connectée à la première extrémité (a) du circuit de commande (101) et à la première extrémité (g) de la bobine (L), et une seconde extrémité (d) du premier dispositif protecteur contre surtension (102) est connectée à la seconde extrémité (b) du circuit de commande (101) et à la seconde extrémité (h) de la bobine (L) ; et
une première extrémité (e) du second dispositif protecteur contre surtension (103) est connectée à la seconde extrémité (b) du circuit de commande (101) et à la seconde extrémité (h) de la bobine (L), et une seconde extrémité (f) du second dispositif protecteur contre surtension (103) est connectée à une terre protectrice (PGND).

2. Circuit de commutation selon la revendication 1, dans lequel le premier dispositif protecteur contre surtension (102) est l'un parmi une diode transitoire, une diode de limitation, une diode redresseuse et un circuit résistance-capacité (RC).

3. Circuit de commutation selon la revendication 1, dans lequel le premier dispositif protecteur contre surtension (102) est une diode transitoire unidirectionnelle (VD1).

4. Circuit de commutation selon l'une quelconque des revendications 1 à 3, dans lequel le second dispositif protecteur contre surtension (103) est une diode transitoire ou une diode de limitation.

5. Circuit de commutation selon l'une quelconque des revendications 1 à 3, dans lequel le second dispositif protecteur contre surtension (103) est une diode transitoire bi-directionnelle (VD2).

6. Circuit de commutation selon l'une quelconque des revendications 1 à 5, dans lequel le circuit de commande (101) est un circuit de commande numérique.

7. Circuit de commutation selon l'une quelconque des revendications 1 à 6, dans lequel une tension nominale du premier dispositif protecteur contre surtension (102) est supérieure à une tension de fonctionnement du circuit de commutation, et une tension nominale du second dispositif protecteur contre surtension (103) est supérieure à la tension de fonctionnement du circuit de commutation.

8. Circuit de commutation selon la revendication 7, dans lequel la tension nominale du premier dispositif protecteur contre surtension (102) est 1,2 fois la tension de fonctionnement du circuit de commutation, et la tension nominale du second dispositif protecteur contre surtension (103) est 1,2 fois la tension de fonctionnement du circuit de commutation.

9. Ensemble de carte de circuit, **caractérisé par** comprenant le circuit de commutation selon l'une quelconque des revendications 1 à 8.

10. Équipement électronique, **caractérisé par** comprenant l'ensemble de carte de circuit selon la revendication 9.
